# EUROPEAN PATENT APPLICATION

(11) **EP 4 006 492 A1**
(43) Date of publication of application: **01.06.2022**
(21) Application number: 20849200.9
(22) Date of filing: 31.07.2020
(51) Int. Cl.: G01C 21/32

(54) **METHOD AND APPARATUS FOR UPDATING MAP, AND STORAGE MEDIUM**

(30) Priority: 06.08.2019 CN 201910723238
(71) Applicant: Huawei Technologies Co., Ltd., Longgang District Shenzhen, Guangdong 518129 (CN)
(72) Inventor: LIU, Jiqiu, Shenzhen, Guangdong 518129 (CN); WU, Yong, Shenzhen, Guangdong 518129 (CN); XIONG, Xin, Shenzhen, Guangdong 518129 (CN)
(74) Representative: Kreuz, Georg Maria
(86) International application number: PCT/CN2020/106129
(87) International publication number: WO 2021/023102

(57) **Abstract**

This application provides a map update method, an apparatus, and a storage medium related to the navigation field, to resolve a problem that when a map used by an automatic driving vehicle is not timely updated, an automatic driving safety risk is relatively high. The map update method includes: matching, by a first vehicle, environmental data collected by at least one data collection apparatus on the first vehicle with prestored map data, and when it is determined that the environmental data does not match the map data, reporting map update information to a cloud server, where the map update information includes related information of a to-be-updated map element; and determining, by the cloud server based on the map update information reported by the first vehicle, whether to update a map, and when the map is determined to be updated, determining a delivery manner of an updated map based on an impact level that is of vehicle traveling and that corresponds to the to-be-updated map element. The foregoing method can be used to ensure that the cloud server timely delivers, to a vehicle end, update information that greatly affects vehicle traveling. This improves traveling safety of the automatic driving vehicle.

## Description

This application claims priority to Chinese Patent Application No. 201910723238.X, filed with the Chinese Patent Office on August 6, 2019 and entitled "MAP UPDATE METHOD, APPARATUS, AND STORAGE MEDIUM", which is incorporated herein by reference in its entirety.

### TECHNICAL FIELD

Embodiments of this application relate to the field of navigation technologies, and in particular, to a map update method, an apparatus, and a storage medium.

### BACKGROUND

An automatic driving vehicle, also referred to as an unmanned vehicle, a computer driving vehicle, or a wheeled mobile robot, is an intelligent vehicle that implements unmanned driving by using a computer system. The automatic driving vehicle relies on cooperation of artificial intelligence, visual computing, a radar, a positioning system, and a map system, so that a computer can automatically and safely operate a motor vehicle without any active human operation.

An electronic map is a necessary tool for navigation of the automatic driving vehicle. Accuracy and precision of the map directly affect safety of the automatic driving vehicle. In an actual application, a road condition often changes, for example, road construction or a traffic sign changes. If a map used by a vehicle is not updated timely, a relatively high safety risk is brought to the automatic driving vehicle.

### SUMMARY

This application provides a map update method, an apparatus, and a storage medium, to ensure that an automatic driving vehicle can timely use an updated map. This improves traveling safety of the automatic driving vehicle.

A first aspect of this application provides a map update method, including: obtaining, by a cloud server, map update information reported by a first vehicle; determining, based on the map update information, whether to update a map; and when the map is determined to be updated, determining, by the cloud server, a delivery manner of an updated map based on an impact level that is of vehicle traveling and that corresponds to a to-be-updated map element, where the impact level of the vehicle traveling is a level that affects vehicle traveling safety.

In this solution, when determining to update the map based on the map update information reported by the first vehicle, the cloud server obtains, from the map update information, the impact level that is of the vehicle traveling and that corresponds to the to-be-updated map element, and the cloud server determines the delivery manner of the updated map based on the impact level. This ensures that update information that greatly affects vehicle traveling is timely delivered to a vehicle end, and improves the traveling safety of an automatic driving vehicle.

In a possible implementation, the determining a delivery manner of an updated map based on an impact level that is of vehicle traveling and that corresponds to a to-be-updated map element includes: when the impact level that is of the vehicle traveling and that corresponds to the to-be-updated map element is a severity level, determining that the delivery manner of the updated map is direct delivery; or when the impact level that is of the vehicle traveling and that corresponds to the to-be-updated map element is a general level, determining that the delivery manner of the updated map is delivery based on a map update request or periodic delivery.

In the foregoing implementation, the delivery manner of the updated map is refined. When a map element that greatly affects the vehicle traveling safety is updated, the cloud server directly delivers the updated map to all online vehicles. When a map element that slightly affects the vehicle traveling safety is updated, the cloud server may centralizedly deliver the updated map based on a preset period, or may deliver the updated map based on the map update request sent by the vehicle.

In a possible implementation, the map update information includes a coordinate position of a to-be-updated map element on the map, and before the determining, based on the map update information, whether to update a map, the method further includes: sending a map measurement instruction to at least one detection device in a first preset area at the coordinate position based on the map update information, where the map measurement instruction is used to instruct the detection device to detect and report map measurement information of a second preset area at the coordinate position.

In a possible implementation, the determining, based on the map update information, whether to update a map includes: determining, based on the map update information and the map measurement information reported by the at least one detection device, whether to update the map.

In the foregoing implementation, the cloud server does not directly determine, based on the map update information reported by the first vehicle, whether to update the map, but particularly considers a plurality of detection devices in an area near the to-be-updated map element, and performs comprehensive analysis based on a plurality of map measurement reporting results, to determine whether to update the map. This avoids mis-reporting of a single vehicle and improves accuracy of map update.

In a possible implementation, the determining, based on the map update information and the map measurement information reported by the at least one detection device, whether to update the map includes: performing information processing on the map update information and the at least one piece of map measurement information, to determine a variation of the to-be-updated map element on the map; and determining, based on the variation of the to-be-updated map element on the map and a preset update threshold, whether to update the map.

Optionally, the variation of the to-be-updated map element on the map includes a variation of a movement distance of the map element (for example, a movement distance of a traffic signal light), a variation of a height/length/width of the map element (for example, a variation of a lane width, and a variation of a height of a traffic signal light), status variation of the map element. A status value of the map element includes 0 and 1, where 0 indicates that there is no map element on the map, and 1 indicates that there is a map element on the map. When a status does not change, the variation is 0, and when the status changes, an absolute value of the variation is 1.

In a possible implementation, the determining, based on the variation of the to-be-updated map element on the map and a preset update threshold of each map element, whether to update the map includes: when the variation of the to-be-updated map element on the map is greater than or equal to the preset update threshold corresponding to the to-be-updated map element, updating the map; or
when the variation of the to-be-updated map element on the map is less than a preset update threshold corresponding to the to-be-updated map element, not updating the map.

It should be noted that the preset threshold corresponding to the map element is a preset threshold corresponding to attribute information of the map element, for example, a preset update threshold corresponding to the movement distance of the traffic signal light, or a preset threshold corresponding to the variation of the lane width. Preset update thresholds corresponding to different map elements may be the same or may be different.

In the foregoing implementation, the variation of the to-be-updated map element is compared with the preset update threshold corresponding to the to-be-updated map element, to determine whether to update the map element. If there is a map element that needs to be updated, the map is updated.

In a possible implementation, the determining, based on the map update information, whether to update a map includes: when the to-be-updated map element meets a map precision requirement, updating the map.

It should be noted that the map precision requirement is a maximum error range allowed by the map element on the map, and the map precision requirement includes a precision requirement corresponding to each map element.

In the foregoing implementation, when the map is updated, it needs to be determined whether the to-be-updated map element meets the map precision requirement. If data precision of the to-be-updated map element meets the map precision requirement of the map element, the map is directly updated.

In a possible implementation, the determining, based on the map update information, whether to update a map includes: when the to-be-updated map element does not meet a map precision requirement, sending a map data collection instruction to a third vehicle, where the map data collection instruction is used to instruct the third vehicle to collect map data of the second preset area at the coordinate position of the to-be-updated map element on the map, and the third vehicle is a data collection vehicle that meets the map precision requirement; and updating the map based on the map data collected by the third vehicle.

In the foregoing implementation, when the map is updated, it needs to be determined whether the to-be-updated map element meets the map precision requirement. If data precision of the to-be-updated map element is relatively low, the map element is not directly updated. The data collection vehicle collects the map data near the map element, and the cloud server updates the map based on the map data collected by the data collection vehicle, so that the to-be-updated map element meets the map precision requirement, to improve accuracy of cloud map data.

In a possible implementation, when the to-be-updated map element does not meet the map precision requirement, the method further includes: setting a map of the second preset area at the coordinate position to be unavailable; or lowering a vehicle automatic driving level corresponding to precision of a map of the second preset area at the coordinate position.

In the foregoing implementation, it is determined that the map needs to be updated, but the to-be-updated map element does not meet the precision requirement. The to-be-updated map element may include a map element with a relatively high impact level of the vehicle traveling. To ensure traveling safety of an online vehicle, before obtaining high precision map data of the to-be-updated map element, the cloud server sets map data near the map element to be unavailable, or indicates a vehicle to lower a vehicle automatic driving level near the map element.

Optionally, the detection device includes a second vehicle and/or a roadside device, and the second vehicle is an online vehicle that uses the map.

The second vehicle may be another online vehicle other than the first vehicle that uses the map, and the second vehicle currently travels in the first preset area near the coordinate position of the to-be-updated map element. The roadside device may be a roadside device that is near the coordinate position of the to-be-updated map element on the map and that can detect the map element.

A second aspect of this application provides a map update method, including: receiving environmental data; and determining whether the environmental data matches prestored map data, and when it is determined that the environmental data does not match the map data, reporting map update information to a cloud server, where the map update information includes at least one of the following: a category of a to-be-updated map element, a coordinate position of the to-be-updated map element on the map, a variation of the to-be-updated map element on the map, an impact level that is of vehicle traveling and that corresponds to the to-be-updated map element, and a data source of the to-be-updated map element. The impact level of the vehicle traveling is a level that affects vehicle traveling safety.

Optionally, a data collection apparatus on a first vehicle may include at least one of a camera, an infrared sensor, a laser radar sensor, a millimeter wave sensor, an ultrasonic sensor, a global positioning system, and an inertial navigation apparatus.

Optionally, environmental data collected by the data collection apparatus may be image data or measurement data, and the measurement data includes three-dimensional space data, ultrasonic data, millimeter wave data, positioning data, and the like.

In this solution, the first vehicle compares the environmental data obtained by an in-vehicle data collection apparatus with the prestored map data, and reports the map update information to the cloud server when determining that the environmental data does not match the prestored map data. The map update information includes the impact level that is of the vehicle traveling and that corresponds to the to-be-updated map element. When determining to update the map element, the cloud server directly delivers an updated map to an online vehicle based on the impact level that is of the vehicle traveling and that corresponds to the to-be-updated map element, to ensure traveling safety of the online vehicle.

Optionally, the map update information further includes at least one of the following: a time length of continuous mismatch, first time when a map element mismatch is detected, second time when the map update information is reported, and confidence of the map update information.

The time length of continuous mismatch refers to a time length in which a to-be-updated map element in the map update information reported by the first vehicle does not match the preset map data. A combination of the first time and the second time may be used to indicate a necessity degree or an emergency degree of updating an unmatched map element (namely, the to-be-updated map element). The confidence of the map update information may be determined by confidence and a weight value of the data collection apparatus that provides the to-be-updated map element. Higher confidence of the map update information indicates a higher reliability of the information.

In a possible implementation, the method further includes: receiving an updated map delivered by the cloud server, where the updated map is a map updated by the cloud server based on the map update information and a map measurement result reported by at least one detection device, and the at least one detection device is located in a first preset area at the coordinate position.

A vehicle adjusts or updates a driving route based on the updated map delivered by the cloud server. The updated map is obtained by the cloud server through comprehensive analysis based on measurement information reported by a plurality of vehicles and roadside devices. This avoids mis-reporting of a single vehicle, and improves accuracy of map update.

Optionally, the detection device includes a second vehicle and/or a roadside device, and the second vehicle is an online vehicle that uses the map.

In a possible implementation, the method further includes: receiving an updated map delivered by the cloud server, where the updated map is a map updated by the cloud server based on map data collected by a third vehicle, and the third vehicle is a data collection vehicle that meets a map precision requirement.

A vehicle adjusts or updates a driving path based on the updated map delivered by the cloud server. The updated map is obtained by the cloud server based on the map data collected by the data collection vehicle. This ensures that a to-be-updated map element meets the map precision requirement, improves accuracy of cloud map data, and ensures traveling safety of the vehicle.

In a possible implementation, before the receiving an updated map delivered by the cloud server, the method further includes: sending a map update request to the cloud server.

In the foregoing implementation, the vehicle may actively initiate the map update request to the cloud server based on a requirement of the vehicle, and the vehicle adjusts or updates the driving route based on the updated map, to improve traveling safety of the automatic driving vehicle.

A third aspect of this application provides a map update apparatus, including: an obtaining module, configured to obtain map update information reported by a first vehicle; and a processing module, configured to determine, based on the map update information, whether to update a map, where the processing module is further configured to: when the map is determined to be updated, determine a delivery manner of an updated map based on an impact level that is of vehicle traveling and that corresponds to a to-be-updated map element, where the impact level of the vehicle traveling is a level that affects vehicle traveling safety.

Optionally, the processing module is specifically configured to: when the impact level that is of the vehicle traveling and that corresponds to the to-be-updated map element is a severity level, determine that the delivery manner of the updated map is direct delivery; or when the impact level that is of the vehicle traveling and that corresponds to the to-be-updated map element is a general level, determine that the delivery manner of the updated map is delivery based on a map update request or periodic delivery.

Optionally, the apparatus further includes: a sending module, configured to send, based on the map update information, a map measurement instruction to at least one detection device in a first preset area at a coordinate position of a to-be-updated map element on the map, where the map measurement instruction is used to instruct the detection device to detect and report map measurement information of a second preset area at the coordinate position.

Optionally, the processing module is specifically configured to determine, based on the map update information and the map measurement information reported by the at least one detection device, whether to update the map.

Optionally, the processing module is specifically configured to: perform information processing on the map update information and the at least one piece of map measurement information, to determine a variation of the to-be-updated map element on the map; and determine, based on the variation of the to-be-updated map element on the map and a preset update threshold, whether to update the map.

Optionally, the processing module is specifically configured to: when the variation of the to-be-updated map element on the map is greater than or equal to the preset update threshold corresponding to the to-be-updated map element, update the map.

Optionally, the processing module is specifically configured to: when the to-be-updated map element meets a map precision requirement, update the map.

Optionally, the apparatus further includes a sending module, configured to: when the to-be-updated map element does not meet a map precision requirement, send a map data collection instruction to a third vehicle, where the map data collection instruction is used to instruct the third vehicle to collect map data of the second preset area at the coordinate position of the to-be-updated map element on the map, and the third vehicle is a data collection vehicle that meets the map precision requirement, where the processing module is further configured to update the map based on the map data collected by the third vehicle.

Optionally, when the to-be-updated map element does not meet the map precision requirement, the processing module is further configured to: set a map of the second preset area at the coordinate position to be unavailable; or lower a vehicle automatic driving level corresponding to precision of a map of the second preset area at the coordinate position.

Optionally, the detection device includes a second vehicle and/or a roadside device, and the second vehicle is an online vehicle that uses the map.

A fourth aspect of this application provides a communications apparatus, including: a memory, configured to store a computer program; and a processor, configured to execute the computer program, so that the communications apparatus performs the method according to any one of the implementations of the first aspect of this application.

A fifth aspect of this application provides an in-vehicle apparatus, including: a receiving module, configured to receive environmental data; a processing module, configured to determine whether the environmental data matches prestored map data; and a sending module, configured to: when it is determined that the environmental data does not match the map data, report map update information to a cloud server, where the map update information includes at least one of the following: a category of a to-be-updated map element, a coordinate position of the to-be-updated map element on the map, a variation of the to-be-updated map element on the map; an impact level that is of vehicle traveling and that corresponds to the to-be-updated map element, where the impact level of the vehicle traveling is a level that affects vehicle traveling safety, and a data source of the to-be-updated map element.

Optionally, the map update information further includes at least one of the following: a time length of continuous mismatch, first time when a map element mismatch is detected, second time when the map update information is reported, and confidence of the map update information.

Optionally, the receiving module is further configured to receive an updated map delivered by the cloud server, where the updated map is a map updated by the cloud server based on the map update information and a map measurement result reported by at least one detection device, and the at least one detection device is located in a first preset area at the coordinate position.

Optionally, the detection device includes a second vehicle and/or a roadside device, and the second vehicle is an online vehicle that uses the map.

Optionally, the receiving module is further configured to receive an updated map delivered by the cloud server, where the updated map is a map updated by the cloud server based on map data collected by a third vehicle, and the third vehicle is a data collection vehicle that meets a map precision requirement.

Optionally, before the receiving module receives the updated map delivered by the cloud server, the sending module is further configured to send a map update request to the cloud server.

A sixth aspect of this application provides a communications apparatus, including: a memory, configured to store a computer program; and a processor, configured to execute the computer program, so that the communications apparatus performs the method according to any one of the implementations of the second aspect of this application.

A seventh aspect of this application provides a readable storage medium, configured to store an instruction. When the instruction is executed, the method according to any one of the implementations of the first aspect of this application is implemented.

An eighth aspect of this application provides a readable storage medium, configured to store an instruction. When the instruction is executed, the method according to any one of the implementations of the second aspect of this application is implemented.

A ninth aspect of this application provides a communications apparatus, including a processor and an interface circuit. The interface circuit is configured to receive a code instruction and transmit the code instruction to the processor; and the processor is configured to run the code instruction to perform the method according to any one of the implementations of the first aspect of this application.

A tenth aspect of this application provides a communications apparatus, including a processor and an interface circuit. The interface circuit is configured to receive a code instruction and transmit the code instruction to the processor; and the processor is configured to run the code instruction to perform the method according to any one of the implementations of the second aspect of this application.

An eleventh aspect of this application provides a wireless communications system, including a plurality of automatic driving vehicles, a plurality of roadside devices, and a cloud server. Wireless communication is performed between the plurality of automatic driving vehicles, wireless communication is performed between the automatic driving vehicle and the roadside device, and wireless communication is performed between the automatic driving vehicle and the cloud server and between the roadside device and the cloud server. The cloud server is configured to perform the method according to any one of the implementations of the first aspect of this application, and the automatic driving vehicle is configured to perform the method according to any one of the implementations of the second aspect of this application.

This application provides a map update method, an apparatus, and a storage medium. The map update method includes: matching, by a first vehicle, environmental data collected by at least one data collection apparatus on the first vehicle with prestored map data, and when it is determined that the environmental data does not match the map data, reporting map update information to a cloud server, where the map update information includes related information of a to-be-updated map element; and determining, by the cloud server based on the map update information reported by the first vehicle, whether to update a map, and when the map is determined to be updated, determining a delivery manner of an updated map based on an impact level that is of vehicle traveling and that corresponds to the to-be-updated map element. The foregoing method can ensure that the cloud server timely delivers, to a vehicle end, update information that greatly affects vehicle traveling. This improves traveling safety of an automatic driving vehicle.

### BRIEF DESCRIPTION OF DRAWINGS

FIG. 1 is a schematic diagram of a wireless communications system according to an embodiment of this application;
FIG. 2 is a schematic flowchart of an existing map update method;
FIG. 3 is a schematic flowchart of a map update method according to an embodiment of this application;
FIG. 4 is a schematic flowchart of another map update method according to an embodiment of this application;
FIG. 5 is a schematic diagram of a structure of a map update apparatus according to an embodiment of this application;
FIG. 6 is a schematic diagram of a structure of an in-vehicle apparatus according to an embodiment of this application;
FIG. 7 is a schematic diagram of a hardware structure of a communications apparatus according to an embodiment of this application; and
FIG. 8 is a schematic diagram of a hardware structure of another communications apparatus according to an embodiment of this application.

### DESCRIPTION OF EMBODIMENTS

The following clearly and completely describes the technical solutions in embodiments of this application with reference to the accompanying drawings in the embodiments of this application.

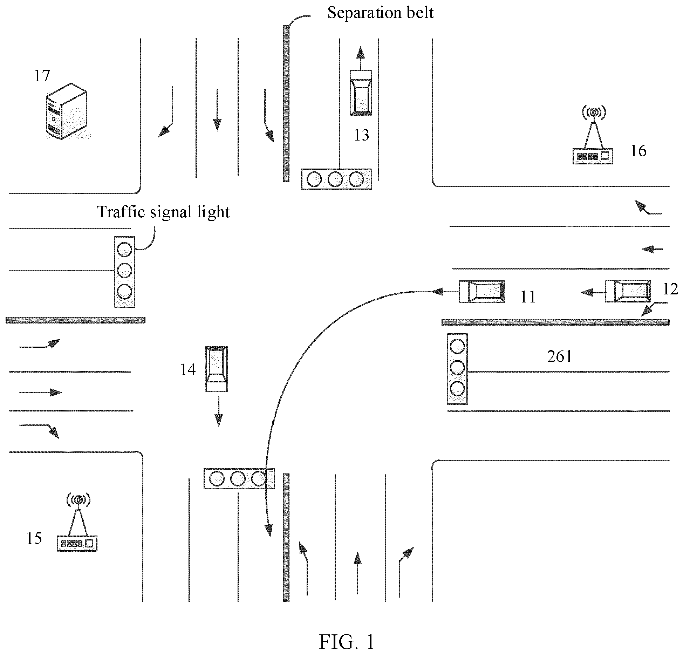

A map update method provided in the embodiments of this application may be applied to a wireless communications system. FIG. 1 is a schematic diagram of a wireless communications system according to an embodiment of this application. As shown in FIG. 1, the wireless communications system in this embodiment may include a plurality of automatic driving vehicles (FIG. 1 shows a vehicle 11, a vehicle 12, a vehicle 13, and a vehicle 14), a plurality of roadside devices (FIG. 1 shows a roadside device 15 and a roadside device 16), and a cloud server 17. Wireless communication may be performed between vehicles, wireless communication may be performed between the vehicle and the roadside device, and wireless communication may be performed between the roadside device and the cloud server and between the vehicle and the cloud server.

The cloud server in this embodiment of this application may be disposed on a core network (Core Network, CN) device side. The CN device corresponds to different devices in different wireless communications systems, for example, corresponds to a serving GPRS support node (Serving GPRS Support Node, SGSN) or a gateway GPRS support node (Gateway GPRS Support Node, GGSN) in the 3G system, corresponds to a mobility management entity (Mobility Management Entity, MME) or a serving gateway (Serving GateWay, S-GW) in the 4G system, and in the 5G system, corresponds to a core network-related device (for example, an NG-Core) in the 5G system. This is not limited in the embodiments of this application. The cloud server in this embodiment of this application provides map information with latest high-precision for the automatic driving vehicle. The automatic driving vehicle may update and download a high-precision map on the cloud server based on a requirement of the automatic driving vehicle, to ensure that the high-precision map used by the automatic driving vehicle is a latest map.

In this embodiment of this application, a terminal device may be disposed in the automatic driving vehicle, and the terminal device may communicate with the roadside device and the cloud server. The terminal device may be referred to user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, a terminal device in a future 5G network or a post-5G network, a terminal device in a future evolved public land mobile network (public land mobile network, PLMN), or the like. This is not limited in the embodiments of this application. Alternatively, the terminal device may be an in-vehicle module, an in-vehicle module, an in-vehicle component, an in-vehicle chip, or an on board unit (on board unit, OBU for short) built into the vehicle as one or more components or units. A vehicle may implement the method in this application by using the in-vehicle module, the in-vehicle module, the in-vehicle component, the in-vehicle chip, or the on board unit. The terminal device may further provide high-precision map data for a user. In other words, the user may view the map data by using a display interface of the terminal device.

The roadside device in this embodiment of this application is a traffic information collection unit or a traffic facility control unit deployed near a road. The traffic information collection unit may provide collected traffic information for the traffic facility control unit, and the traffic facility control unit may execute a control instruction for a traffic facility. The traffic facility includes a traffic signal light, an electronic traffic sign, and the like. It should be understood that the technical solutions in the embodiments of this application may be applied to a long term evolution (Long Term Evolution, LTE) architecture, or may be applied to a universal mobile telecommunications system (Universal Mobile Telecommunications System, UMTS) terrestrial radio access network (UMTS Terrestrial Radio Access Network, UTRAN) architecture, or a global system for mobile communications (Global System for Mobile Communication, GSM)/enhanced data rates for GSM evolution (Enhanced Data Rate for GSM Evolution, EDGE) system radio access network (GSM EDGE Radio Access Network, GERAN) architecture. In the UTRAN architecture or/ the GERAN architecture, a function of an MME is completed by a serving general packet radio service (General Packet Radio Service, GPRS) support node (Serving GPRS Support, SGSN), and a function of an SGW/PGW is completed by a gateway GPRS support node (Gateway GPRS Support Node, GGSN). The technical solutions in the embodiments of this application may be further applied to another communications system, such as a public land mobile network (Public Land Mobile Network, PLMN) system, even a future 5G communications system or a communications system after 5G, and the like. This is not limited in the embodiments of this application.

Based on any one of the foregoing wireless communications systems, the high-precision map provided by the cloud server includes attribute information of different map elements. The map element includes but is not limited to a traffic signal light, a traffic sign, a road element, and the like. Correspondingly, attribute information of the traffic signal light and the traffic sign may include position information, and attribute information of the road element may include a lane quantity, a lane width, ramp connectivity, and the like. As time goes by, the attribute information of the map element on the map may change, for example, a position of the traffic signal light moves, the lane quantity decreases, or the road is closed. As a result, the high-precision map is inconsistent with an actual road condition. To ensure accuracy of the high-precision map information, the cloud server needs to update the map timely, to ensure traveling safety of an automatic driving vehicle that uses the map.

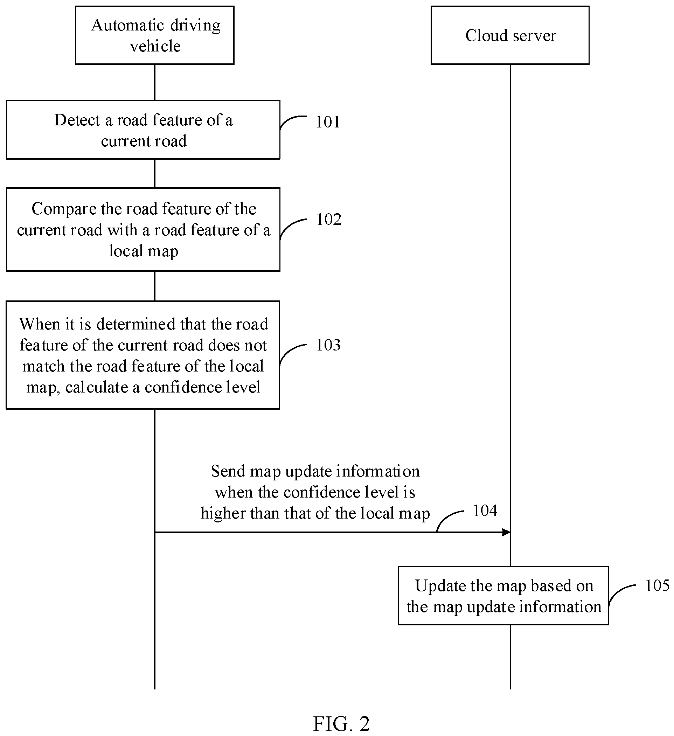

FIG. 2 is a schematic flowchart of an existing map update method. As shown in FIG. 2, the existing map update method includes the following steps.

Step 101: An automatic driving vehicle detects a road feature of a current road.

Step 102: The automatic driving vehicle compares the road feature of the current road with a road feature of a local map.

Step 103: When it is determined that the road feature of the current road does not match the road feature of the local map, the automatic driving vehicle calculates a confidence level.

Step 104: When the confidence level is higher than a confidence level of the local map, the automatic driving vehicle sends map update information to a cloud server.

Step 105: The cloud server updates the map based on the map update information.

In an existing technical solution, a vehicle end calculates a confidence level. Because sensors of different vehicles differ greatly, confidence levels calculated by the vehicle end vary greatly, and map update information reported by a single vehicle may be incorrect, a map updated by a cloud server based on the map update information may be inaccurate. In addition, the existing technical solution does not limit how the cloud server releases and updates the map. For an automatic driving vehicle that uses the map, a driving accident may be caused because the map is not timely updated, and there is a relatively large safety risk.

To resolve the foregoing technical problem, an embodiment of this application provides a map update method. The cloud server determines, based on map update information reported by one or more automatic driving vehicles, whether to update a map, and when the map is determined to be updated, determines a delivery manner of an updated map. This ensures that the updated map can be timely delivered to a vehicle end. After receiving the map update information, the cloud server does not directly update the map based on the information reported by the vehicle, but updates the map or does not update the map after performing comprehensive determining. This improves accuracy of map update.

The following uses specific embodiments to describe in detail the map update method in this application. It should be noted that the following specific embodiments may be combined with each other, and same or similar content is not repeatedly described in different embodiments.

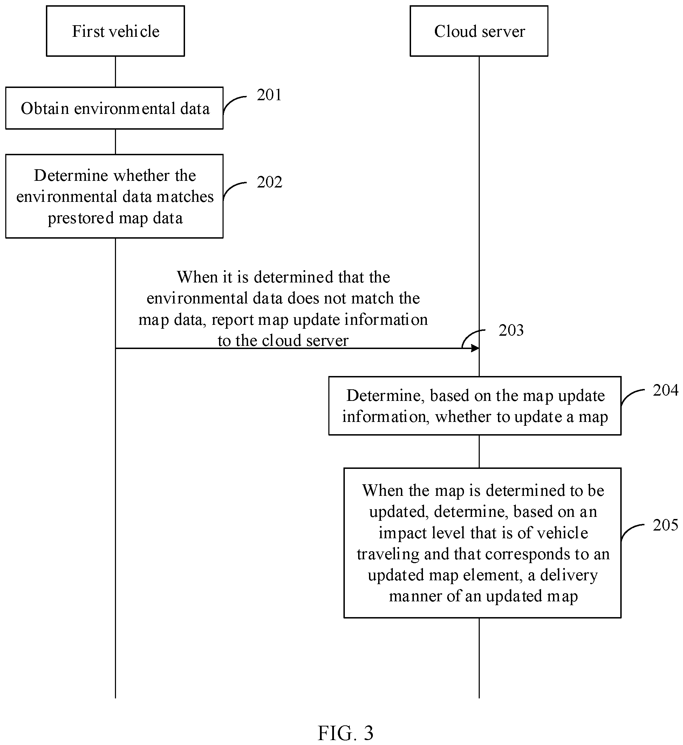

FIG. 3 is a schematic flowchart of a map update method according to an embodiment of this application. As shown in FIG. 3, the map update method provided in this embodiment includes the following steps.

Step 201: A first vehicle receives environmental data.

In this embodiment, the first vehicle is any online automatic driving vehicle that uses a cloud map, and may be the vehicle 11, the vehicle 12, the vehicle 13, or the vehicle 14 in FIG. 1. The first vehicle receives the environmental data sent by at least one data collection apparatus on the first vehicle, and the data collection apparatus may include at least one of a camera, an infrared sensor, a laser radar sensor, a millimeter wave sensor, an ultrasonic sensor, a global positioning system (global positioning system, GPS for short), and an inertial navigation device. The environmental data collected by the data collection apparatus may be image data collected by the data collection apparatus, or may be measurement data collected by the data collection apparatus. The measurement data includes three-dimensional space data, ultrasonic data, millimeter wave data, positioning data, and the like.

Specifically, the camera in this embodiment is configured to collect a visible light image around the automatic driving vehicle. The visible light image may include obstacles such as other vehicles and pedestrians, and may further include road information such as a lane line, a lane sideline, a stop line, a pedestrian crosswalk, a traffic signal light, a traffic sign, a toll station, and an inspection station. A driving computer or an on board unit on the vehicle determines attribute information of a map element based on the visible light image collected by the camera.

The infrared sensor in this embodiment is configured to perform non-contact temperature measurement around the automatic driving vehicle. For example, when there is a pedestrian around the vehicle, the infrared sensor may be configured to collect an infrared ray emitted by the pedestrian, and determine a position of the pedestrian by measuring a surface temperature of a human body. The driving computer or the on board unit on the vehicle may determine the position of the pedestrian around the vehicle based on temperature data collected by the infrared sensor, and may further determine a traveling speed of the pedestrian.

The laser radar sensor in this embodiment is configured to detect three-dimensional space data around the automatic driving vehicle. A working principle of the laser radar sensor is to transmit a detection signal (a laser beam) to a target, and then compare a received signal (a target echowave) reflected from the target with a transmit signal, and after proper processing, obtain related information of the target. The driving computer or the on board unit on the vehicle determines the attribute information of the map element based on the three-dimensional space data collected by the laser radar sensor.

The ultrasonic radar sensor in this embodiment is configured to detect an obstacle around the automatic driving vehicle. A working principle of the ultrasonic radar sensor is that an ultrasonic generator in the sensor generates an ultrasonic wave, and then a receiving probe receives an ultrasonic wave reflected by the obstacles. The driving computer or the on board unit on the vehicle may determine a distance between the vehicle and the obstacle based on a time difference of ultrasonic reflection receiving, to determine a specific position of the obstacle on the road. An ultrasonic radar has low costs, a short detection distance, high detection accuracy, and is not affected by light conditions.

The millimeter wave radar sensor in this embodiment may also be configured to collect a traveling speed of the obstacle, the distance between the automatic driving vehicle and the obstacle, and the like, and is particularly applicable to bad weather such as smog. The millimeter wave radar sensor has advantages of strong capability of penetrating fog, smoke and dust, strong anti-interference capability, and the like.

The GPS in this embodiment is configured to determine a specific position of the automatic driving vehicle based on a measured distance between a satellite at a known position and the automatic driving vehicle by combining measurement data of a plurality of satellites. With reference to other data collection apparatuses, a specific position of the obstacle may be determined.

The inertial navigation apparatus in this embodiment is configured to detect a traveling speed, pose information, and the like of the automatic driving vehicle. A working principle of the inertial navigation apparatus is to perform integration on time and acceleration by measuring the acceleration of the automatic driving vehicle in an inertial reference system according to Newton's law of mechanics, and transforms the acceleration into a navigation coordinate system, to obtain information such as a speed, a yaw angle, and a position of the automatic driving vehicle in the navigation coordinate system. With reference to other data collection apparatuses, a specific position, a movement speed, and the like of the obstacle may be determined.

An absolute position of the automatic driving vehicle may be determined based on the GPS and the inertial navigation apparatus, and a relative position of each map element relative to the automatic driving vehicle may be obtained with reference to the camera, the infrared sensor, the laser radar sensor, the ultrasonic radar sensor, and the millimeter wave sensor, to determine an absolute position of the map element on the map.

Step 202: The first vehicle determines whether the environmental data matches prestored map data.

Specifically, a driving computer or an on board unit on the first vehicle determines map data at a current position of the first vehicle based on the obtained environmental data collected by the at least one data collection apparatus. The map data includes a category of the map element and attribute information of the map element. The map data at the current position of the first vehicle is compared with the prestored map data at a corresponding position, to determine whether the map data at the current position of the first vehicle matches the prestored map data at the corresponding position.

The map element in this embodiment includes but is not limited to a traffic signal light, a traffic sign, a road element, a toll station, an inspection station, and the like. The road element includes but is not limited to a lane line, a lane sideline, a stop line, a pedestrian crosswalk, a ramp, and the like. Correspondingly, attribute information of the traffic signal light may include a quantity, a type, and a position of the traffic signal light. For example, the traffic signal light includes four signal lights: a straight-through red light, a straight-through green light, a straight-through yellow light, and a left-turn control light. Attribute information of the traffic sign may include a quantity, content, and a position of the traffic sign. For example, the traffic sign includes two content indications indicating a speed limit of 40 ahead and no right turn ahead. Attribute information of the road element may include a position of the road element, a quantity of lanes, a lane width, ramp connectivity, and the like.

Step 203: When it is determined that the environmental data does not match the map data, the first vehicle reports map update information to a cloud server.

In this embodiment, the map update information includes at least one of the following:
a coordinate position of the to-be-updated map element on the map,
a category of a to-be-updated map element,
a variation of the to-be-updated map element on the map,
an impact level that is of vehicle traveling and that corresponds to the to-be-updated map element, and a data source of the to-be-updated map element.

The to-be-updated map element may be understood as a map element that does not match the preset map data. The first vehicle determines map data at a position of a current vehicle based on the environmental data, and determines the to-be-updated map element based on the map data at the position of the current vehicle and the prestored map data. For example, the to-be-updated map element is a traffic signal light, and there is no traffic signal light at a corresponding position in preset map data. In other words, the traffic signal light is a newly added map element. In this case, the first vehicle reports the traffic signal light and a position of the traffic signal light. For another example, the to-be-updated map element is a lane, a width of the lane is 2.5 m, and a lane width of preset map data at a corresponding position is 3.5 m. In other words, the lane width is narrower than an original width. In this case, the first vehicle reports the lane and a position and the width of the lane. For another example, when the to-be-updated map element is a traffic sign, the traffic sign is used to indicate that a U-turn is prohibited, and the traffic sign of preset map data at a corresponding position is used to indicate that the U-turn can be performed. In other words, the traffic sign changes, the first vehicle reports the traffic sign and content of the traffic sign.

After determining the to-be-updated map element, the first vehicle generates the map update information, where the map update information includes at least one of the category of a to-be-updated map element, the coordinate position of the to-be-updated map element on the map, the variation of the to-be-updated map element on the map, the impact level that is of the vehicle traveling and that corresponds to the to-be-updated map element, and the data source of the to-be-updated map element, and sends the map update information to the cloud server, so that the cloud server determines, based on the map update information, whether to update the map and/or determines a delivery manner of an updated map.

It should be noted that the variation of the to-be-updated map element on the map may be a movement distance of the map element on the map. For example, the traffic signal light is translated to the left by 2 m from an original position. The variation of the to-be-updated map element on the map may also be a height variation, a length variation, or a width variation of the map element on the map. For example, the width of the lane is expanded from 2.5 m to 3.5 m, and a width of a road barrier is shortened from 10 m to 5 m. The variation of the to-be-updated map element on the map may also be a status variation of the map element on the map. For example, a traffic signal light originally does not exist at a crossroad, a status value of the traffic signal light is set to 0, and a traffic signal light is currently added at the crossroad, in this case, the status value of the traffic signal light is set to 1, and a status variation of the traffic signal light on the map is 1. The status variation may also be used by the cloud server to subsequently determine whether to update the map. For details, refer to the following description.

The impact level that is of the vehicle traveling and that corresponds to the to-be-updated map element is a level that the to-be-updated map element affects vehicle traveling safety. A higher impact level that is of vehicle traveling and that corresponds to a map element indicates a shorter time limit for updating the map element. This parameter is used to indicate the cloud server to perform a corresponding delivery action. For details, refer to step 205.

The data source of the to-be-updated map element refers to the data collection apparatus that detects the to-be-updated map element. The data collection apparatus may be any one or more of the data collection apparatuses of the step 201. Different data collection apparatuses have different confidence and weight values. This parameter is used by the first vehicle to determine overall confidence of the map update information.

Optionally, the map update information may further include a time length of continuous mismatch; first time when a map element mismatch is detected; second time when the map update information is reported; and confidence of the map update information.

The time length of continuous mismatch refers to a time length in which a to-be-updated map element in the map update information reported by the first vehicle does not match the preset map data. For example, the first vehicle reports that road blocking of a road segment has lasted for three days.

A combination of the first time and the second time may be used to indicate a necessity degree or an emergency degree of updating an unmatched map element (namely, the to-be-updated map element).

The confidence of the map update information may be determined based on confidence and a weight value of the data collection apparatus that provides the to-be-updated map element. For example, the to-be-updated map element includes only a lane width change, and the change is determined based on environmental data collected by the laser radar sensor and the camera. Therefore, the confidence of the map update information including the lane width change is determined by first confidence and a first weight value of the laser radar sensor, and second confidence and a second weight value of the camera. It should be noted that in different application environments, a weight value of each data collection apparatus is adjustable. For example, in bad weather such as smog, a weight value of the millimeter wave radar sensor can be increased, and weight values of other data collection apparatuses can be reduced. In a dark environment, a weight value of the camera may be reduced, and the weight values of other data collection apparatuses may be increased at the same time.

Optionally, the first vehicle may report the map update information for a plurality of times.

Step 204: The cloud server determines, based on the map update information, whether to update the map.

In this embodiment, the cloud server determines the variation of the to-be-updated map element on the map based on the map update information reported by the first vehicle. For the variation of the to-be-updated map element on the map, refer to the step 203. Details are not described herein again.

Specifically, the cloud server determines, based on the variation of the to-be-updated map element on the map and the preset update threshold, whether to update the map. The preset update threshold includes a preset update threshold corresponding to attribute information of each map element. For example, a preset update threshold corresponding to the movement distance of the traffic signal light is 1 m. When the movement distance of the traffic signal light is greater than or equal to 1 m, the cloud server determines to update the map. For another example, a preset update threshold corresponding to the width variation of the lane is 1 m. When the width variation of the lane is greater than or equal to 1 m, the cloud server determines to update the map. For another example, a preset update threshold corresponding to the status variation of the traffic signal light is 1. When the status variation of the traffic signal light is equal to 1, the cloud server determines to update the map. It should be noted that the status variation of the map element is 1 or 0. When the status variation of the map element is 1, it indicates that the map element is a newly added map element, and when the status variation of the map element is 0, it indicates that the map element is an original map element.

Step 205: When the map is determined to be updated, the cloud server determines, based on an impact level that is of vehicle traveling and that corresponds to a to-be-updated map element, a delivery manner of an updated map.

In this embodiment, the impact level that is of the vehicle traveling and that corresponds to the to-be-updated map element is a level that the to-be-updated map element affects vehicle traveling safety. A higher impact level that is of the vehicle traveling and that corresponds to a map element indicates a tighter time limit for updating the map element. In other words, the cloud server needs to immediately update the map element. To ensure traveling safety of an automatic driving vehicle that uses the map, the cloud server should immediately deliver the updated map. Correspondingly, when an impact level that is of vehicle traveling and that corresponds to a map element is lower, a time limit for updating the map element is generally not tight. The cloud server may send a map update request after receiving a vehicle request, or periodically deliver the updated map. It can be learned that this embodiment provides at least three delivery manners: direct delivery, delivery based on a map update request of a vehicle end, and periodic delivery.

Specifically, in an implementation, the impact level that is of the vehicle traveling and that corresponds to the to-be-updated map element is a severity level, and the cloud server determines that the delivery manner of the updated map is direct sending. For example, a lane is closed, a ramp is closed, a quantity of lanes is reduced, a lane width is reduced, a new traffic signal light appears, and the like may all be set to the severity level. When any one of the foregoing to-be-updated map elements at the severity level appears, the cloud server directly sends the updated map to all vehicle ends. This manner avoids a problem that a driving accident occurs because the map of the automatic driving vehicle is not timely updated, or a problem that a route is replanned for a plurality of times.

In another implementation, the impact level that is of the vehicle traveling and that corresponds to the to-be-updated map element is a general level, and the cloud server determines that the delivery manner of the updated map is delivery based on the map update request or periodic delivery. For example, a traffic sign change, a traffic sign loss, a traffic signal light loss, and the like may all be set to the general level. When any one of the foregoing to-be-updated map elements at the general level appears, the cloud server may send the updated map to a requested vehicle end based on the map update request, or send the update map to all vehicle ends based on a preset period.

According to the map update method provided in this embodiment of this application, the first vehicle matches the environmental data collected by the at least one data collection apparatus on the first vehicle with the prestored map data, and when it is determined that the environmental data does not match the map data, reports the map update information to the cloud server, where the map update information includes related information of the to-be-updated map element, and the cloud server determines, based on the map update information reported by the first vehicle, whether to update the map, and when the map is determined to be updated, determines the delivery manner of the updated map based on the impact level that is of the vehicle traveling and that corresponds to the to-be-updated map element. The foregoing method canensure that the cloud server timely delivers, to the vehicle end, update information that greatly affects vehicle traveling. This improves traveling safety of the automatic driving vehicle.

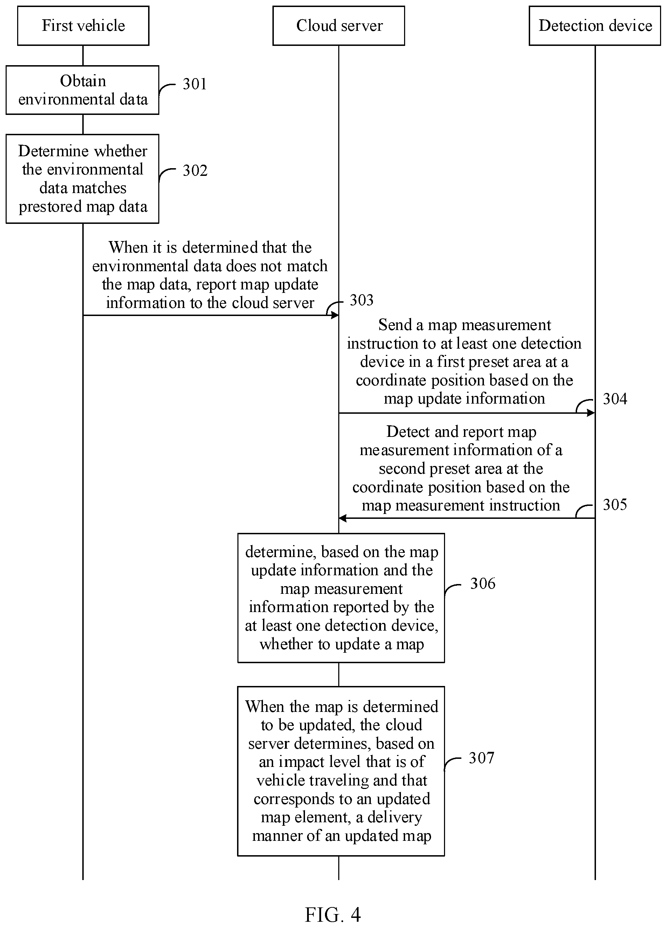

FIG. 4 is a schematic flowchart of another map update method according to an embodiment of this application. As shown in FIG. 4, the map update method provided in this embodiment includes the following steps.

Step 301: A first vehicle receives environmental data sent by at least one data collection apparatus on the first vehicle.

Step 302: The first vehicle determines whether the environmental data matches prestored map data.

Step 303: When it is determined that the environmental data does not match the map data, the first vehicle reports map update information to a cloud server.

The step 301 to the step 303 in this embodiment are the same as step 201 to step 203 in the foregoing embodiment. Reference may be made to the foregoing embodiment, and details are not described herein again.

Step 304: The cloud server sends a map measurement instruction to at least one detection device in a first preset area at a coordinate position based on the map update information.

The coordinate position is a coordinate position of a to-be-updated map element on the map. The first preset area may be a circular area that uses the coordinate position as a center and uses a first preset distance as a radius.

The detection device in this embodiment includes a second vehicle and/or a roadside device. The second vehicle may be another online vehicle other than the first vehicle that uses the map, and the second vehicle currently travels in the first preset area near the coordinate position of the to-be-updated map element. When there is no other automatic driving vehicle in the first preset area near the coordinate position of the to-be-updated map element, the second vehicle may be an online vehicle that is in another area except the first vehicle and that uses the map. The roadside device may be a roadside device that is near the coordinate position of the to-be-updated map element on the map and that can detect the map element.

Step 305: The detection device detects and reports map measurement information near the coordinate position based on the map measurement instruction.

For the second vehicle, after receiving the map measurement instruction sent by the cloud server, the second vehicle travels near a coordinate position indicated by the map measurement instruction, and when reaching the coordinate position, collects, by using at least one data collection apparatus on the second vehicle, environmental data around the second vehicle. A process in which a driving computer or an on board unit on the second vehicle processes the environmental data is the same as that of the first vehicle in the foregoing embodiment. For details, refer to the step 202 in the foregoing embodiment. Details are not described herein again. It should be noted that the map measurement information is reported by the vehicle after the vehicle receives the map measurement instruction, and the map update information is actively reported by the vehicle. Essentially, the map measurement information and the map update information are the same, and are both used to report a mismatched map element to the cloud server. Therefore, in this embodiment, map measurement information reported by the second vehicle is similar to the map update information reported by the first vehicle. For details, refer to the description of the map update information in the foregoing embodiment. Details are not described herein again.

For the roadside device, after receiving the map measurement instruction sent by the cloud server, the roadside device obtains detection data near the coordinate position, and compares the detection data with prestored map data near the coordinate position, to determine whether the detection data matches the prestored map data. When it is determined that the detection data does not match the map data, the roadside device reports map measurement information. A data collection apparatus on the roadside device in this embodiment may include any one or more data collection apparatuses on the foregoing automatic driving vehicle. Refer to the foregoing description, and details are not described herein again.

When a detection device does not find a mismatched map element, the detection device may send map measurement feedback information to the cloud server, where the feedback information indicates that no mismatched map element is found, or does not send the map measurement feedback information.

Step 306: The cloud server determines, based on the map update information and the map measurement information reported by the at least one detection device, whether to update a map.

In this embodiment, the cloud server performs information processing on the map update information and the at least one piece of map measurement information, to determine a variation of the to-be-updated map element on the map, and determines, based on the variation of the to-be-updated map element on the map and a preset update threshold, whether to update the map.

Specifically, when the variation of the to-be-updated map element on the map is greater than or equal to the preset update threshold corresponding to the to-be-updated map element, the map is updated. Alternatively, when the variation of the to-be-updated map element on the map is less than the preset update threshold corresponding to the to-be-updated map element, the map is not updated.

A process in which the cloud server performs information processing on the map update information and the at least one piece of map measurement information includes a process of data processing on a variation of a same map element in a plurality of pieces of information on the map. The data processing may include average value calculation, weighted calculation, artificial intelligence calculation, or the like. For example, both the map update information reported by the first vehicle and the map measurement information reported by the roadside device include a movement distance of a traffic signal light, which is respectively 0.5 m and 0.7 m. The cloud server determines, based on the two measurement results, that an average value of the movement distance of the traffic signal light is 0.6 m. Assuming that a preset update threshold corresponding to the movement distance of the traffic signal light is 1 m, it may be determined that a position of the traffic signal light does not need to be updated. For another example, the data collection apparatus of the first vehicle and the data collection apparatus of the second vehicle detect that a quantity of lanes at a position on the map is respectively 3 and 4, and a quantity of lanes at the position in the prestored map data is 4. A data source of a quantity of vehicles reported by the first vehicle is a camera, and a data source of a quantity of vehicles reported by the second vehicle is a millimeter wave radar sensor. It is assumed that a traveling environment that is at a current position and that is obtained by the cloud server is a harsh environment, for example, a foggy day. The cloud server needs to perform weighted calculation on data about a quantity of vehicles at the current position with reference to a weight (for example, a weight value of the millimeter wave radar sensor is 1, and a weight value of the camera is 0) of the data collection apparatus in the harsh environment. Finally, it is determined that the quantity of lanes in the position is still 4, and does not change. The cloud server does not update the map. It should be noted that in this embodiment, comprehensive analysis may be performed, with reference to an artificial intelligence algorithm, on data corresponding to a same map element in a plurality of pieces of information, to determine a variation of the map element on the map. The following artificial intelligence algorithms may be used to perform the comprehensive analysis on the data: a decision tree, a random forest algorithm, logistic regression, an SVM, naive Bayes, a K-nearest neighbor algorithm, a K-means algorithm, an Adaboost algorithm, a neural network, and Markov.

Because data collection apparatuses on detection devices are different, and environmental data obtained by a same data collection apparatus from different angles of view may also be different, map measurement results that are of a same map element and that are detected by different detection devices are different. After receiving the map update information of the first vehicle, the cloud server in this embodiment notifies another vehicle and a roadside device that are near the coordinate position of the to-be-updated map element that is reported by the first vehicle and that is on the map to perform key perception on the map element. This improves detection precision and accuracy of the to-be-updated map element, and avoids a case in which mis-reporting of a single vehicle occurs.

Step 307: When the map is determined to be updated, the cloud server determines, based on an impact level that is of vehicle traveling and that corresponds to a to-be-updated map element, a delivery manner of an updated map.

The step 307 in this embodiment is the same as the step 205 in the foregoing embodiment. Reference may be made to the foregoing embodiment, and details are not described herein again.

According to the map update method provided in this embodiment, after the first vehicle reports the map update information, the cloud server does not directly determine to update the map, but sends the map measurement instruction to the second vehicle and/or the roadside device that are/is near the coordinate position of the to-be-updated map element on the map, to collect more map measurement information, determines whether to update the map based on the map update information and a plurality of pieces of map measurement information, and when the map is determined to be updated, determines a delivery manner of an updated map based on the impact level that is of the vehicle traveling and that corresponds to the to-be-updated map element. In the foregoing method, information processing is performed on map information reported by a plurality of vehicles and/or roadside devices, to improve map update accuracy.

Based on the foregoing embodiments, optionally, when the map is determined to be updated, the cloud server may update the map in the following two manners.

In an implementation, the cloud server further determines whether the to-be-updated map element meets a map precision requirement, and updates the map when the to-be-updated map element meets the map precision requirement.

In another implementation, the cloud server further determines whether the to-be-updated map element meets a map precision requirement, and when the to-be-updated map element does not meet the map precision requirement, sends a map data collection instruction to a third vehicle, the map data collection instruction is used to instruct the third vehicle to collect map data of a second preset area at the coordinate position, and the third vehicle is a data collection vehicle that meets the map precision requirement. The cloud server updates the map based on the map data collected by the third vehicle.

The map precision requirement refers to a maximum allowed error range of a map element on the map. The map precision requirement includes a precision requirement corresponding to each map element. It may be understood that precision requirements of different map elements may be the same or may be different. For example, a maximum position precision error of a lane line is 0.2 m, and a maximum position precision error of a traffic light is 0.5 m.

It should be noted that the third vehicle is different from the first vehicle and the second vehicle. The first vehicle and the second vehicle may be automatic driving vehicles that run online in a wireless communications system, and the third vehicle may be a data collection vehicle that is connected to the cloud server and that is used to make a high-precision cloud map.

Optionally, when the to-be-updated map element does not meet the map precision requirement, the method may further include:
setting a map of the second preset area at the coordinate position to be unavailable; or
lowering a vehicle automatic driving level corresponding to precision of a map of the second preset area at the coordinate position.

The second preset area may be a circular area that uses the coordinate position as a center and uses a second preset distance as a radius. The first preset area may be a circular area less than or equal to the first preset area. In other words, the second preset distance may be less than or equal to the first preset distance.

The vehicle automatic driving level is used to indicate an intelligence degree and an automatic degree of the automatic driving vehicle. According to an SAE standard, vehicle automatic driving is classified into six levels: no automation (L0), driving support (L1), partial automation (L2), conditional automation (L3), high automation (L4), and full automation (L5).

When the map of the second preset area at the coordinate position is set to unavailable, the cloud server delivers the updated map to the vehicle in any delivery manner. The map of the second preset area at the coordinate position is marked in the updated map as unavailable. After receiving the updated map, the vehicle may replan a route based on a requirement of the vehicle. This avoids that the vehicle enters the second preset area that is indicated on the map and that is at the coordinate position, and improves traveling safety of the vehicle.

When the vehicle automatic driving level corresponding to the precision of the map of the second preset area at the coordinate position is lowered, the cloud server may send an instruction of lowering the automatic driving level when delivering the updated map, and a vehicle that enters or is about to enter the second preset area may reduce the automatic driving level based on the instruction, to ensure that the vehicle safely passes through the area.

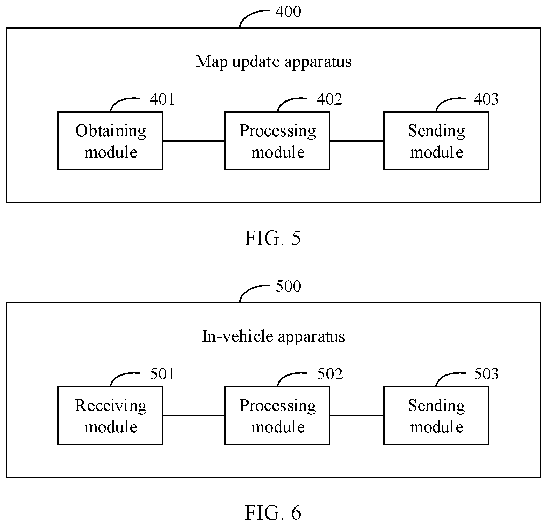

FIG. 5 is a schematic diagram of a structure of a map update apparatus according to an embodiment of this application. As shown in FIG. 5, the map update apparatus 400 provided in this embodiment includes:
an obtaining module 401, configured to obtain map update information reported by a first vehicle; and
a processing module 402, configured to determine, based on the map update information, whether to update a map, where
the processing module 402 is further configured to: when the map is determined to be updated, determine a delivery manner of an updated map based on an impact level that is of vehicle traveling and that corresponds to a to-be-updated map element, where the impact level of the vehicle traveling is a level that affects vehicle traveling safety.

Optionally, the processing module 402 is specifically configured to:
when the impact level that is of the vehicle traveling and that corresponds to the to-be-updated map element is a severity level, determine that the delivery manner of the updated map is direct delivery; or when the impact level that is of the vehicle traveling and that corresponds to the to-be-updated map element is a general level, determine that the delivery manner of the updated map is delivery based on a map update request or periodic delivery.

Optionally, the map update information includes a coordinate position of the to-be-updated map element on the map. The map update apparatus 400 further includes a sending module 403.

Before the processing module 402 determines, based on the map update information, whether to update the map, the sending module 403 is configured to send, based on the map update information, a map measurement instruction to at least one detection device in a first preset area at the coordinate position, where the map measurement instruction is used to instruct the detection device to detect and report map measurement information of a second preset area at the coordinate position.

The processing module 402 is specifically configured to determine, based on the map update information and the map measurement information reported by the at least one detection device, whether to update the map.

Optionally, the processing module 402 is specifically configured to:
perform information processing on the map update information and the at least one piece of map measurement information, to determine a variation of the to-be-updated map element on the map; and
determine, based on the variation of the to-be-updated map element on the map and a preset update threshold, whether to update the map.

Optionally, the processing module 402 is specifically configured to: when the variation of the to-be-updated map element on the map is greater than or equal to the preset update threshold corresponding to the to-be-updated map element, update the map.

Optionally, the processing module 402 is specifically configured to: when the to-be-updated map element meets a map precision requirement, update the map.

Optionally, the sending module 403 is further configured to:
when the to-be-updated map element does not meet a map precision requirement, send a map data collection instruction to a third vehicle, where the map data collection instruction is used to instruct the third vehicle to collect map data of the second preset area at the coordinate position of the to-be-updated map element on the map, and the third vehicle is a data collection vehicle that meets the map precision requirement; and

The processing module 402 is further configured to update the map based on the map data collected by the third vehicle.

Optionally, when the to-be-updated map element does not meet a map precision requirement, the processing module 402 is further configured to:
set a map of the second preset area at the coordinate position to be unavailable; or
lower a vehicle automatic driving level corresponding to precision of a map of the second preset area at the coordinate position.

Optionally, the detection device includes a second vehicle and/or a roadside device, and the second vehicle is an online vehicle that uses the map.

The map update apparatus provided in this embodiment of this application may execute the technical solution of the cloud server in the foregoing method embodiment. Implementation principles and technical effects thereof are similar, and details are not described herein again.

FIG. 6 is a schematic diagram of a structure of an in-vehicle apparatus according to an embodiment of this application. As shown in FIG. 6, the in-vehicle apparatus 500 provided in this embodiment includes:
a receiving module 501, configured to receive environmental data;
a processing module 502, configured to determine whether the environmental data matches prestored map data, and when it is determined that the environmental data does not match the map data, a sending module 503 is configured to report map update information to a cloud server, where
the map update information includes at least one of the following:
   a category of a to-be-updated map element,
   a coordinate position of the to-be-updated map element on the map,
   a variation of the to-be-updated map element on the map,
   an impact level that is of vehicle traveling and that corresponds to the to-be-updated map element, where the impact level of the vehicle traveling is a level that affects vehicle traveling safety, and
   a data source of the to-be-updated map element.

Optionally, the map update information further includes at least one of the following: a time length of continuous mismatch, first time when a map element mismatch is detected, second time when the map update information is reported, and confidence of the map update information.

Optionally,
the receiving module 501 is further configured to receive an updated map delivered by the cloud server, where the updated map is a map updated by the cloud server based on the map update information and a map measurement result reported by at least one detection device, and the at least one detection device is located in a first preset area at the coordinate position.

Optionally, the detection device includes a second vehicle and/or a roadside device, and the second vehicle is an online vehicle that uses the map.

Optionally, the receiving module 501 is further configured to:
receive an updated map delivered by the cloud server, where the updated map is a map updated by the cloud server based on map data collected by a third vehicle, and the third vehicle is a data collection vehicle that meets a map precision requirement.

Optionally, the sending module 503 is further configured to: before receiving the updated map delivered by the cloud server, send a map update request to the cloud server.

The in-vehicle apparatus provided in this embodiment of this application may execute the technical solution of the first vehicle in the foregoing method embodiment. Implementation principles and technical effects thereof are similar, and details are not described herein again.

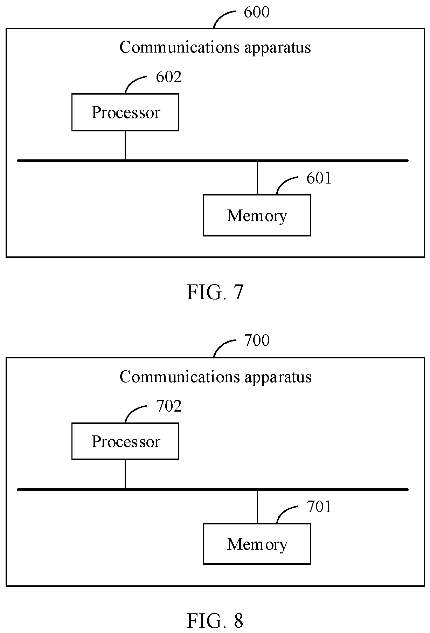

FIG. 7 is a schematic diagram of a hardware structure of a communications apparatus according to an embodiment of this application. The communications apparatus provided in this embodiment may be disposed on a cloud server. As shown in FIG. 7, the communications apparatus 600 provided in this embodiment includes: a memory 601, configured to store a computer program; and a processor 602, configured to execute the computer program, so that the communications apparatus 600 performs the method steps performed by the cloud server in any one of the foregoing method embodiments.

FIG. 8 is a schematic diagram of a hardware structure of another communications apparatus according to an embodiment of this application. The communications apparatus in this embodiment may be disposed on an automatic driving vehicle. As shown in FIG. 8, the communications apparatus 700 provided in this embodiment includes: a memory 701, configured to store a computer program; and a processor 702, configured to execute the computer program, so that the communications apparatus 700 performs the method steps performed by the first vehicle in any one of the foregoing method embodiments.

In implementation of the communications apparatus 600 and the communications apparatus 700, the memory and the processor are directly or indirectly electrically connected to implement data transmission or interaction. For example, these elements may be electrically connected to each other through one or more communications buses or signal cables, for example, may be connected to each other through a bus. The memory stores a computer-executable instruction for implementing a data access control method, including at least one software function module that may be stored in the memory in a form of software or firmware. The processor executes various function applications and data processing by running a software program and a module that are stored in the memory.

The memory may be, but is not limited to, a random access memory (Random Access Memory, RAM for short), a read-only memory (Read Only Memory, ROM for short), a programmable read-only memory (Programmable Read-Only Memory, PROM for short), an erasable programmable read-only memory (Erasable Programmable Read-Only Memory, EPROM for short), an electric erasable read-only memory (Electric Erasable Programmable Read-Only Memory, EEPROM for short), and the like. The memory is configured to store a program, and the processor executes the program after receiving the execution instruction. Further, the software program and the module in the memory may further include an operating system, and the operating system may include various software components and/or drivers configured to manage a system task (for example, memory management, storage device control, and power management), and may communicate with various hardware or software components, to provide a running environment of other software components.

The processor may be an integrated circuit chip and has a signal processing capability. The processor may be a general-purpose processor, including a central processing unit (Central Processing Unit, CPU for short), a network processor (Network Processor, NP for short), and the like. It may implement or perform the methods, the steps, and logical block diagrams that are disclosed in the embodiments of this application. The general purpose processor may be a microprocessor, or the processor may be any conventional processor or the like.

This application further provides a readable storage medium, configured to store an instruction. When the instruction is executed, the map update method performed by the cloud server in any one of the foregoing method embodiments is implemented.

This application further provides a readable storage medium, configured to store an instruction. When the instruction is executed, the map update method performed by the first vehicle in any one of the foregoing method embodiments is implemented.

An embodiment of this application further provides a communications apparatus, including a processor and an interface. The processor is configured to perform the map update method performed by the cloud server in any one of the foregoing method embodiments.

An embodiment of this application further provides a communications apparatus, including a processor and an interface. The processor is configured to perform the map update method performed by the first vehicle in any one of the foregoing method embodiments.

It should be understood that the communications apparatus may be a chip, and the processor may be implemented by hardware or software. When the processor is implemented by hardware, the processor may be a logic circuit, an integrated circuit, or the like. When the processor is implemented by using software, the processor may be a general purpose processor, and is implemented by reading software code stored in a memory. The memory may be integrated into the processor, or may be located outside the processor and exist independently.

It should be understood that the terms "system" and "network" in this embodiment may be used interchangeably in this embodiment. The term "and/or" in this embodiment describes only an association relationship for describing associated objects and represents that three relationships may exist. For example, A and/or B may represent the following three cases: Only A exists, both A and B exist, and only B exists. In addition, the character"/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the embodiments provided in this application, it should be understood that the disclosed system, apparatus and method may be implemented in other manners. For example, the described communications apparatus is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. A disk (Disk) and disc (disc) used by this application includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely example embodiments of the technical solutions of this application, but is not intended to limit the protection scope of this application. Any modification, equivalent replacement, or improvement made without departing from the spirit and principle of this application shall fall within the protection scope of this application.

## Claims

1. A map update method, comprising:
obtaining map update information reported by a first vehicle;
determining, based on the map update information, whether to update a map; and
when the map is determined to be updated, determining a delivery manner of an updated map based on an impact level that is of vehicle traveling and that corresponds to a to-be-updated map element, wherein the impact level of the vehicle traveling is a level that affects vehicle traveling safety.

2. The method according to claim 1, wherein the determining a delivery manner of an updated map based on an impact level that is of vehicle traveling and that corresponds to a to-be-updated map element comprises:
when the impact level that is of the vehicle traveling and that corresponds to the to-be-updated map element is a severity level, determining that the delivery manner of the updated map is direct delivery; or
when the impact level that is of the vehicle traveling and that corresponds to the to-be-updated map element is a general level, determining that the delivery manner of the updated map is delivery based on a map update request or periodic delivery.

3. The method according to claim 1 or 2, wherein the map update information comprises a coordinate position of a to-be-updated map element on the map, and before the determining, based on the map update information, whether to update a map, the method further comprises:
sending a map measurement instruction to at least one detection device in a first preset area at the coordinate position based on the map update information, wherein the map measurement instruction is used to instruct the detection device to detect and report map measurement information of a second preset area at the coordinate position.

4. The method according to any one of claims 1 to 3, wherein the determining, based on the map update information, whether to update a map comprises:
determining, based on the map update information and the map measurement information reported by the at least one detection device, whether to update the map.

5. The method according to claim 4, wherein the determining, based on the map update information and the map measurement information reported by the at least one detection device, whether to update the map comprises:
performing information processing on the map update information and the at least one piece of map measurement information, to determine a variation of the to-be-updated map element on the map; and
determining, based on the variation of the to-be-updated map element on the map and a preset update threshold, whether to update the map.

6. The method according to claim 5, wherein the determining, based on the variation of the to-be-updated map element on the map and a preset update threshold of each map element, whether to update the map comprises:
when the variation of the to-be-updated map element on the map is greater than or equal to the preset update threshold corresponding to the to-be-updated map element, updating the map.

7. The method according to any one of claims 1 to 3, wherein the determining, based on the map update information, whether to update a map comprises:
when the to-be-updated map element meets a map precision requirement, updating the map.

8. The method according to any one of claims 1 to 3, wherein the determining, based on the map update information, whether to update a map comprises:
when the to-be-updated map element does not meet a map precision requirement, sending a map data collection instruction to a third vehicle, wherein the map data collection instruction is used to instruct the third vehicle to collect map data of the second preset area at the coordinate position of the to-be-updated map element on the map, and the third vehicle is a data collection vehicle that meets the map precision requirement; and
updating the map based on the map data collected by the third vehicle.

9. The method according to claim 8, wherein when the to-be-updated map element does not meet the map precision requirement, the method further comprises:
setting a map of the second preset area at the coordinate position to be unavailable; or
lowering a vehicle automatic driving level corresponding to precision of a map of the second preset area at the coordinate position.

10. The method according to any one of claims 3 to 9, wherein the detection device comprises a second vehicle and/or a roadside device, and the second vehicle is an online vehicle that uses the map.

11. A map update method, comprising:
receiving environmental data; and
determining whether the environmental data matches prestored map data, and when it is determined that the environmental data does not match the map data, reporting map update information to a cloud server, wherein
the map update information comprises at least one of the following:
a category of a to-be-updated map element,
a coordinate position of the to-be-updated map element on a map,
a variation of the to-be-updated map element on the map,
an impact level that is of vehicle traveling and that corresponds to the to-be-updated map element, wherein the impact level of the vehicle traveling is a level that affects vehicle traveling safety, and
a data source of the to-be-updated map element.

12. The method according to claim 11, wherein the map update information further comprises at least one of the following:
a time length of continuous mismatch,
first time when a map element mismatch is detected,
second time when the map update information is reported, and
confidence of the map update information.

13. The method according to claim 11 or 12, further comprising:
receiving an updated map delivered by the cloud server, wherein the updated map is a map updated by the cloud server based on the map update information and a map measurement result reported by at least one detection device, and the at least one detection device is located in a first preset area at the coordinate position.

14. The method according to claim 13, wherein the detection device comprises a second vehicle and/or a roadside device, and the second vehicle is an online vehicle that uses the map.

15. The method according to claim 11 or 12, further comprising:
receiving an updated map delivered by the cloud server, wherein the updated map is a map updated by the cloud server based on map data collected by a third vehicle, and the third vehicle is a data collection vehicle that meets a map precision requirement.

16. The method according to claim 13 or 15, wherein before the receiving an updated map delivered by the cloud server, the method further comprises: sending a map update request to the cloud server.

17. A map update apparatus, comprising:
an obtaining module, configured to obtain map update information reported by a first vehicle; and
a processing module, configured to determine, based on the map update information, whether to update a map, wherein
the processing module is further configured to: when the map is determined to be updated, determine a delivery manner of an updated map based on an impact level that is of vehicle traveling and that corresponds to a to-be-updated map element, wherein the impact level of the vehicle traveling is a level that affects vehicle traveling safety.

18. The apparatus according to claim 17, wherein the processing module is specifically configured to:
when the impact level that is of the vehicle traveling and that corresponds to the to-be-updated map element is a severity level, determine that the delivery manner of the updated map is direct delivery; or
when the impact level that is of the vehicle traveling and that corresponds to the to-be-updated map element is a general level, determine that the delivery manner of the updated map is delivery based on a map update request or periodic delivery.

19. The apparatus according to claim 17 or 18, wherein the apparatus further comprises:
a sending module, configured to send, based on the map update information, a map measurement instruction to at least one detection device in a first preset area at a coordinate position of a to-be-updated map element on the map, wherein the map measurement instruction is used to instruct the detection device to detect and report map measurement information of a second preset area at the coordinate position.

20. The apparatus according to any one of claims 17 to 19, wherein the processing module is specifically configured to:
determine, based on the map update information and the map measurement information reported by the at least one detection device, whether to update the map.

21. The apparatus according to claim 20, wherein the processing module is specifically configured to:
perform information processing on the map update information and the at least one piece of map measurement information, to determine a variation of the to-be-updated map element on the map; and
determine, based on the variation of the to-be-updated map element on the map and a preset update threshold, whether to update the map.

22. The apparatus according to claim 21, wherein the processing module is specifically configured to:
when the variation of the to-be-updated map element on the map is greater than or equal to the preset update threshold corresponding to the to-be-updated map element, update the map.

23. The apparatus according to any one of claims 17 to 19, wherein the processing module is specifically configured to:
when the to-be-updated map element meets a map precision requirement, update the map.

24. The apparatus according to any one of claims 17 to 19, wherein the apparatus further comprises:
a sending module, configured to: when the to-be-updated map element does not meet a map precision requirement, send a map data collection instruction to a third vehicle, wherein the map data collection instruction is used to instruct the third vehicle to collect map data of the second preset area at the coordinate position of the to-be-updated map element on the map, and the third vehicle is a data collection vehicle that meets the map precision requirement, wherein
the processing module is further configured to update the map based on the map data collected by the third vehicle.

25. The apparatus according to claim 24, wherein when the to-be-updated map element does not meet the map precision requirement, the processing module is further configured to:
set a map of the second preset area at the coordinate position to be unavailable; or
lower a vehicle automatic driving level corresponding to precision of a map of the second preset area at the coordinate position.

26. The apparatus according to any one of claims 19 to 25, wherein the detection device comprises a second vehicle and/or a roadside device, and the second vehicle is an online vehicle that uses the map.

27. A communications apparatus, comprising:
a memory, configured to store a computer program; and
a processor, configured to execute the computer program, so that the communications apparatus performs the method according to any one of claims 1 to 10.

28. An in-vehicle apparatus, comprising:
a receiving module, configured to receive environmental data;
a processing module, configured to determine whether the environmental data matches prestored map data; and
a sending module, configured to: when it is determined that the environmental data does not match the map data, report map update information to a cloud server, wherein
the map update information comprises at least one of the following:
a category of a to-be-updated map element,
a coordinate position of the to-be-updated map element on the map,
a variation of the to-be-updated map element on the map,
an impact level that is of vehicle traveling and that corresponds to the to-be-updated map element, wherein the impact level of the vehicle traveling is a level that affects vehicle traveling safety, and
a data source of the to-be-updated map element.

29. The apparatus according to claim 28, wherein the map update information further comprises at least one of the following:
a time length of continuous mismatch,
first time when a map element mismatch is detected,
second time when the map update information is reported, and
confidence of the map update information.

30. The apparatus according to claim 28 or 29, wherein
the receiving module is further configured to receive an updated map delivered by the cloud server, wherein the updated map is a map updated by the cloud server based on the map update information and a map measurement result reported by at least one detection device, and the at least one detection device is located in a first preset area at the coordinate position.

31. The apparatus according to claim 30, wherein the detection device comprises a second vehicle and/or a roadside device, and the second vehicle is an online vehicle that uses the map.

32. The apparatus according to claim 28 or 29, wherein
the receiving module is further configured to receive an updated map delivered by the cloud server, wherein the updated map is a map updated by the cloud server based on map data collected by a third vehicle, and the third vehicle is a data collection vehicle that meets a map precision requirement.

33. The apparatus according to claim 30 or 32, wherein before the receiving module receives the updated map delivered by the cloud server, the sending module is further configured to send a map update request to the cloud server.

34. A communications apparatus, comprising:
a memory, configured to store a computer program; and
a processor, configured to execute the computer program, so that the communications apparatus performs the method according to any one of claims 11 to 16.

35. A readable storage medium, configured to store an instruction, wherein when the instruction is executed, the method according to any one of claims 1 to 10 is implemented.

36. A readable storage medium, configured to store an instruction, wherein when the instruction is executed, the method according to any one of claims 11 to 16 is implemented.

37. A communications apparatus, comprising a processor and an interface circuit, wherein
the interface circuit is configured to receive a code instruction and transmit the code instruction to the processor; and
the processor is configured to run the code instruction to perform the method according to any one of claims 1 to 10.

38. A communications apparatus, comprising a processor and an interface circuit, wherein
the interface circuit is configured to receive a code instruction and transmit the code instruction to the processor; and
the processor is configured to run the code instruction to perform the method according to any one of claims 11 to 16.
